# EUROPEAN PATENT APPLICATION

(11) **EP 3 376 811 A1**
(43) Date of publication of application: **19.09.2018**
(21) Application number: 16864193.4
(22) Date of filing: 08.11.2016
(51) Int. Cl.: H04W 72/04

(54) **BASE STATION, USER DEVICE, REFERENCE SIGNAL TRANSMISSION METHOD, AND SIGNAL RECEPTION METHOD**

(30) Priority: 10.11.2015 JP 2015220792
(71) Applicant: NTT DOCOMO, INC., Chiyoda-ku Tokyo 100-6150 (JP)
(72) Inventor: KIYOSHIMA, Kohei, Tokyo 100-6150 (JP); OOKUBO, Naoto, Tokyo 100-6150 (JP); ABETA, Sadayuki, Tokyo 100-6150 (JP); NAGATA, Satoshi, Tokyo 100-6150 (JP); HARADA, Hiroki, Tokyo 100-6150 (JP)
(74) Representative: Hoffmann Eitle
(86) International application number: PCT/JP2016/083047
(87) International publication number: WO 2017/082232

(57) **Abstract**

A base station according to an embodiment is provided. The base station communicates with a user apparatus in an LTE-supported wireless communication system. The base station includes a generation unit configured to generate a signal in which a UE specific reference signal is mapped according to a first pattern in which, in a range of resource elements enclosed by a segment in the time direction indicated by a predetermined subframe in which a synchronization signal is mapped and by a segment in the frequency direction in which the synchronization signal is mapped, a UE specific reference signal is mapped onto a resource element other than a resource element onto which the synchronization signal is mapped; and a transmission unit configured to transmit the generated signal.

## Description

### BACKGROUND OF THE INVENTION

### 1. Field of the Invention

The present invention relates to a base station, a user apparatus, a reference signal transmission method and a signal reception method.

### 2. Description of the Related Art

In an LTE (Long Term Evolution) system, multiple reference signals are defined used for performing downlink (DL) channel estimation, reception quality measurement, etc., by a user apparatus (UE: User Equipment). For example, a CRS (Cell specific Reference Signal), a CSI-RS (Channel State Information Reference Signal), a UE-RS (UE specific Reference Signal), etc., are defined.

Further, in the LTE system, a PSS (Primary Synchronization Signal) and an SSS (Secondary Synchronization Signal) are each defined (refer to NPL 1) as an SS (Synchronization Signal) used for time and frequency synchronization performed between the user apparatus and a base station (eNB: enhanced NodeB) .

Further, in the LTE system, as a downlink transmission method, multiple transmission modes (TM: transmission mode) are defined. For example, TM9 is a transmission mode added in 3GPP Rel-10, in which an eight layer MIMO, which uses a maximum of eight antenna ports, is supported.

### [Citation List]

### [Non-Patent Literature]

[NPL 1] 3GPP TS36.211 V12.7.0 (2015-09)
[NPL 2] 3GPP TS36.213 V12.7.0 (2015-09)

### SUMMARY OF THE INVENTION

### [TECHNICAL PROBLEM]

In some of the downlink transmission modes (e.g., TM9, TM10, etc.), the user apparatus receives a PDSCH (Physical Downlink Shared Channel) by using a UE-RS.

Here, according to NPL 2, it is specified in the transmission modes that, in the case where, in an SS mapped subframe (SS included subframe), an SS mapped RB (Resource Block) is included in a part of the PDSCH RBs allocated to the user apparatus, the user apparatus should not receive any of the PDSCH RBs allocated to the user apparatus in the subframe.

Because of the above-described specifications, it is necessary for the base station to perform PDSCH scheduling by avoiding the SS mapped RB in SS mapped subframes. As a result, the base station cannot use all of the RBs, which causes reduced throughput (including reduced peak throughput) and reduced radio capacity. For example, in the case of UL/DL subframe configuration=2 in TDD (Time Division Duplex), the throughput is reduced by about 6%.

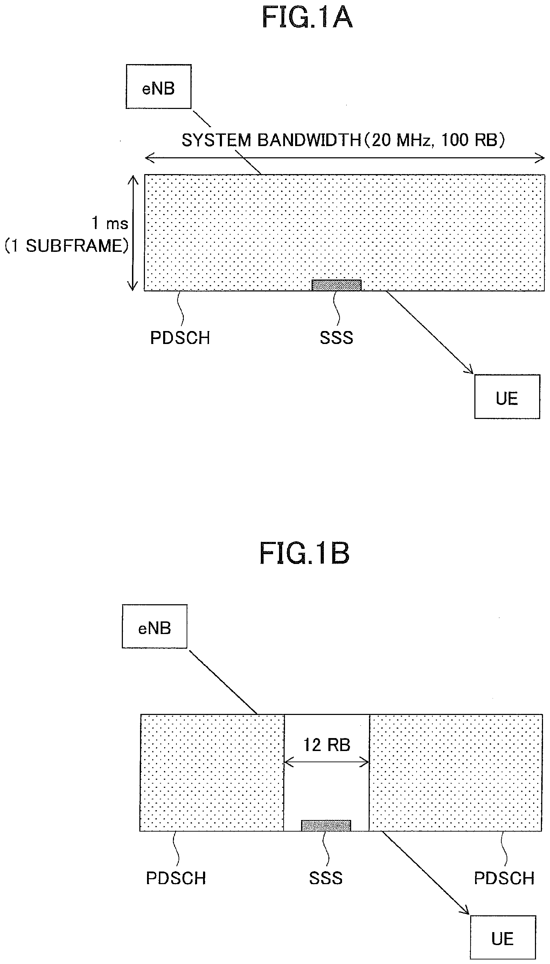

A specific example will be described while making reference to drawings. For example, as illustrated in Fig. 1A, a case is assumed in which all PDSCH RBs of the entire system band are allocated to the same user apparatus, and an SS (SSS in an example of Fig. 1A) is included in a part of the RBs. In the case illustrated in Fig. 1A, the user apparatus does not receive any of the PDSCH RBs of the entire system band.

Therefore, as illustrated in Fig. 1B, the base station performs scheduling by avoiding the SS mapped RBs in SS mapped subframes. It should be noted that the PDSCH scheduling in the frequency direction is performed in a RB group unit (1 RB group = 4 RBs in the case where the bandwidth is 20 MHz). Further, the PDSCH scheduling in the time direction is performed in a two RB unit within a subframe (hereinafter, referred to as "RB pair"). An SS is mapped in a band of about 6 RBs in the center of the bandwidth. Therefore, in an example of Fig. 1B, it is necessary for the base station to perform PDSCH scheduling by avoiding RB pairs in a range of three RB groups (3*4=12 RBs) in the center of the bandwidth within a subframe.

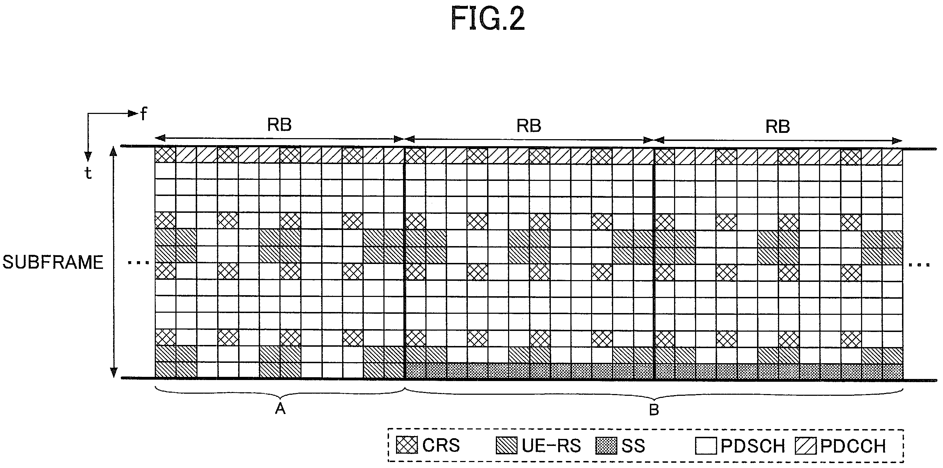

Here, referring to the drawings, the reason will be briefly described why it is defined that, in the case where an SS mapped RB is included in a part of the PDSCH RBs allocated to the user apparatus, the user apparatus should not receive any of the PDSCH RBs allocated to the user apparatus. As illustrated in Fig. 2, multiple reference signals are mapped in the entire PDSCH in a distributed manner. A range "A" indicates RB pairs in which an SS is not mapped, and a range "B" indicates RB pairs in which an SS is mapped. As illustrated in Fig. 2, in the range "B", an SS is mapped onto a part of resource elements, onto which an UE-RS should have been mapped. In other words, in the range "B", a part of the UE-RS is missing. When a part of the UE-RS is missing, the user apparatus cannot receive the UE-RS properly, and thus, the user apparatus cannot demodulate the RBs properly. The above is the reason why the above-described specifications are defined.

The present invention has been made in view of the above. It is an object of the present invention to provide a technique in which it is possible to increase throughput in a LTE-supported wireless communication system.

### [SOLUTION TO PROBLEM]

A base station according to an embodiment is provided. The base station communicates with a user apparatus in an LTE-supported wireless communication system. The base station communicates with a user apparatus in a wireless communication system in which LTE is supported. The base station includes a generation unit configured to generate a signal in which a UE specific reference signal is mapped according to a first pattern in which, in a range of resource elements enclosed by a segment in the time direction indicated by a predetermined subframe in which a synchronization signal is mapped and a segment in the frequency direction in which the synchronization signal is mapped, a UE specific reference signal is mapped onto a resource element other than a resource element onto which the synchronization signal is mapped; and a transmission unit configured to transmit the generated signal.

### [ADVANTAGEOUS EFFECTS OF INVENTION]

According to an embodiment, a technique is provided in which it is possible to increase throughput in a LTE-supported wireless communication system.

### BRIEF DESCRIPTION OF THE DRAWINGS

Fig. 1A is a drawing illustrating a problem.
Fig. 1B is a drawing illustrating a problem.
Fig. 2 is a drawing illustrating a problem.
Fig. 3 is a drawing illustrating mappings of a UE-RS (UE specific RS) defined in 3GPP.
Fig. 4 is a drawing illustrating TDD UL/DL subframe configurations.
Fig. 5 is a drawing illustrating a special subframe configuration.
Fig. 6A is a drawing illustrating PSS/SSS mapping positions.
Fig. 6B is a drawing illustrating PSS/SSS mapping positions.
Fig. 7 is a drawing illustrating an example of a system configuration of a wireless communication system according to an embodiment.
Fig. 8 is a sequence diagram illustrating processing steps of a wireless communication system according to an embodiment.
Fig. 9A is a drawing illustrating processing steps No. 1 according to an embodiment.
Fig. 9B is a drawing illustrating processing steps No. 1 according to an embodiment.
Fig. 10A is a drawing illustrating processing steps No. 2-1 according to an embodiment.
Fig. 10B is a drawing illustrating processing steps No. 2-1 according to an embodiment.
Fig. 11A is a drawing illustrating processing steps No. 2-2 according to an embodiment.
Fig. 11B is a drawing illustrating processing steps No. 2-2 according to an embodiment.
Fig. 12A is a drawing illustrating processing steps No. 2-3 according to an embodiment.
Fig. 12B is a drawing illustrating processing steps No. 2-3 according to an embodiment.
Fig. 13 is a sequence diagram illustrating processing steps of a wireless communication system according to an embodiment.
Fig. 14 is a drawing illustrating an example of a functional structure of a base station according to an embodiment.
Fig. 15 is a drawing illustrating an example of a functional structure of a user apparatus according to an embodiment.
Fig. 16 is a drawing illustrating an example of a hardware configuration of a base station according to an embodiment.
Fig. 17 is a drawing illustrating an example of a hardware configuration of a user apparatus according to an embodiment.

### DETAILED DESCRIPTION OF THE PREFERRED EMBODIMENTS

In the following, referring to the drawings, embodiments of the present invention will be described. It should be noted that the embodiments described below are merely examples and the embodiments to which the present invention is applied are not limited to the following embodiments. For example, it is assumed that a wireless communication system according to an embodiment complies with LTE standards. However, the present invention can be applied not only to LTE but also to other schemes. It should be noted that, in the application specification and claims, the term "LTE" is used, not only for meaning a communication method corresponding to 3GPP release 8 or 9, but also for including a fifth generation communication method corresponding to 3GPP release 10, 11, 12, 13, 14, or later.

### <Mapping positions onto which a UE-RS and an SS are mapped>

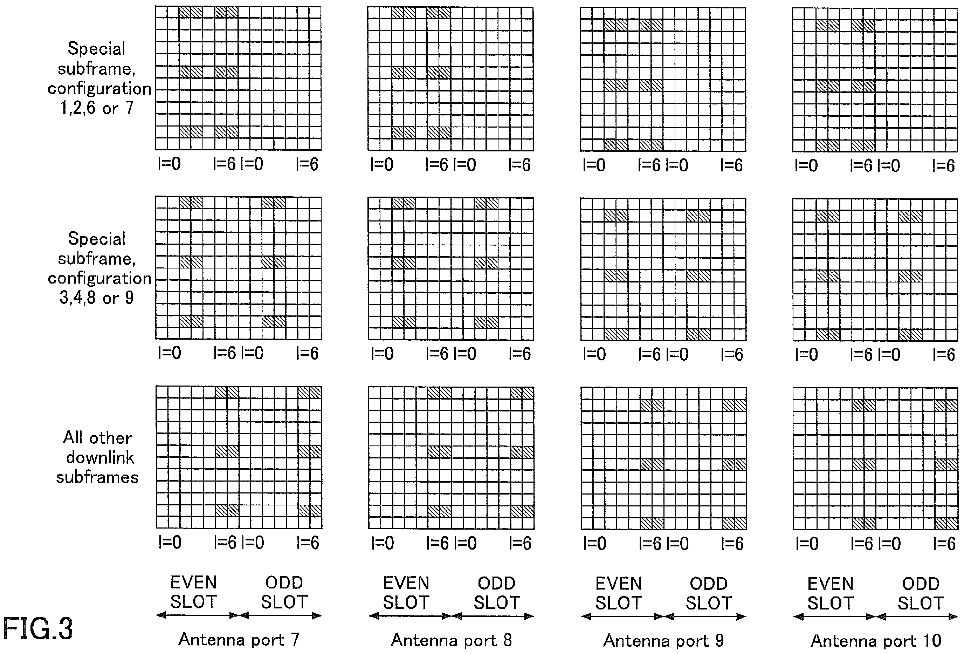

First, positions will be described onto which a UE-RS that is defined in current 3GPP is mapped. According to NPL 2, as illustrated in Fig. 3, UE-RSs are multiplexed for each of the antenna ports in FDM (Frequency Division Multiplex) and CDM (Code Division Multiplex), and mapped onto predetermined resource elements in transmission to a base station eNB.

Fig. 3 illustrates patterns of resource elements onto which UE-RSs are mapped and transmitted by an antenna port 7, an antenna port 8, an antenna port 9, and an antenna port 10 in this order from left to right. Further, in each pattern, the UE-RS is multiplexed in CDM by using two consecutive resource elements in time direction. In other words, when one of the two consecutive resource elements is missing, a user apparatus UE will be unable to receive the UE-RS properly.

Further, Fig. 3 illustrates patterns of resource elements onto which the UE-RS is mapped in a case where a TDD Special Subframe Configuration is "1, 2, 6, or 7", in a case where a TDD Special Subframe Configuration is "3, 4, 8, or 9", or in "other" cases (including TDD downlink subframe, and FDD), from top to bottom, in this order. In the following, for the sake of convenience, the UE-RS mapping patterns illustrated in Fig. 3 are referred to as "conventional UE-RS mapping patterns".

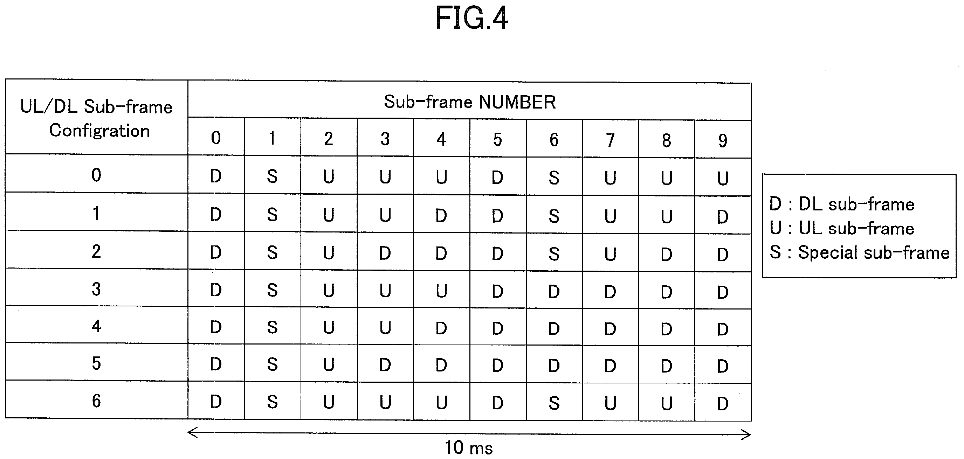

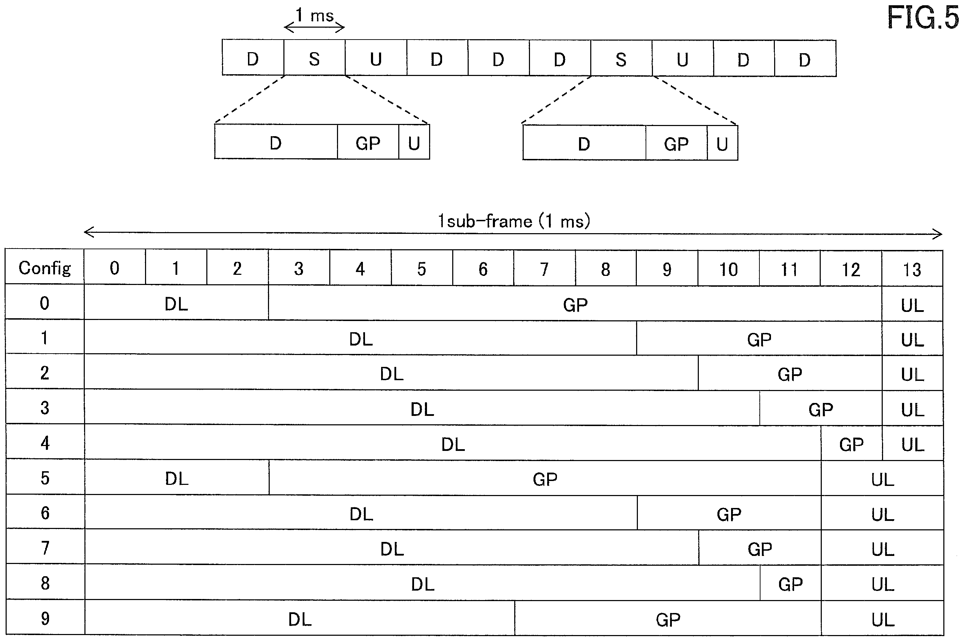

Here, the TDD Special Subframe Configuration will be briefly described. The special subframe (Special Subframe) is provided in order to avoid interference between DL and UL when switching from DL to UL in TDD. As illustrated in Fig. 4, the special subframe is provided at predefined positions for each UL/DL subframe configuration. Further, as illustrated in Fig. 5, nine different special subframe configurations, whose DL/GP(Guard Period)/UL ratios are different from each other, are defined.

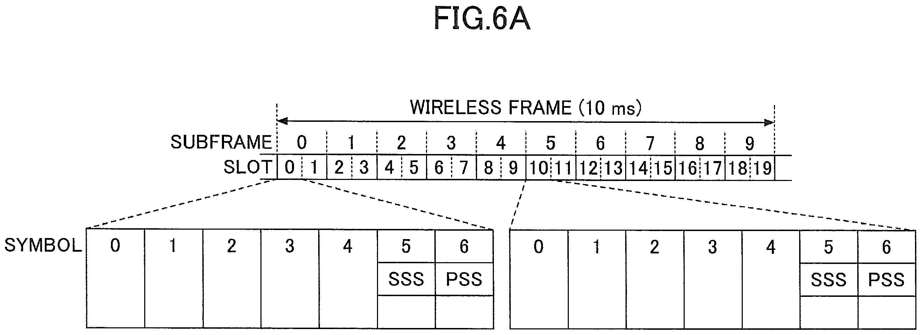

Next, the SS that is defined in current 3GPP will be described. Fig. 6A illustrates positions onto which PSS/SSS are mapped in FDD-LTE. As illustrated in Fig. 6A, in FDD-LTE, a PSS is mapped onto the last OFDM symbol in a slot 0 and a slot 10. Further, an SSS is mapped onto an OFDM symbol to the left of the PSS.

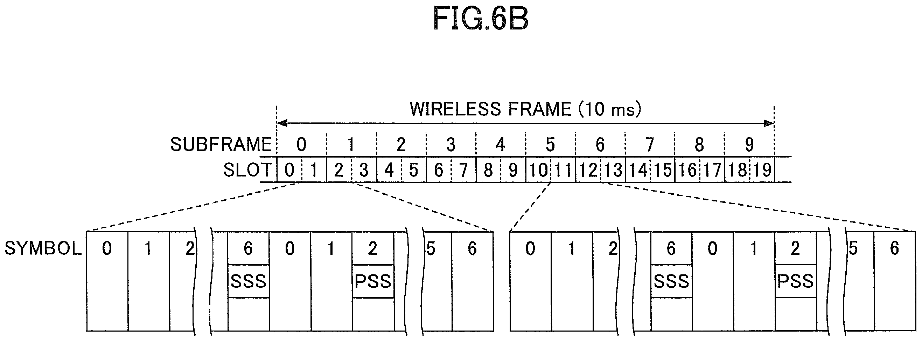

Fig. 6B illustrates positions onto which PSS/SSS are mapped in TDD-LTE. As illustrated in Fig. 6B, in TDD-LTE, a PSS is mapped onto the third OFDM symbol in a subframe 1 and a subframe 6. Further, an SSS is mapped onto the last OFDM symbol in a subframe 0 and a subframe 5.

### <System configuration, outline of operation>

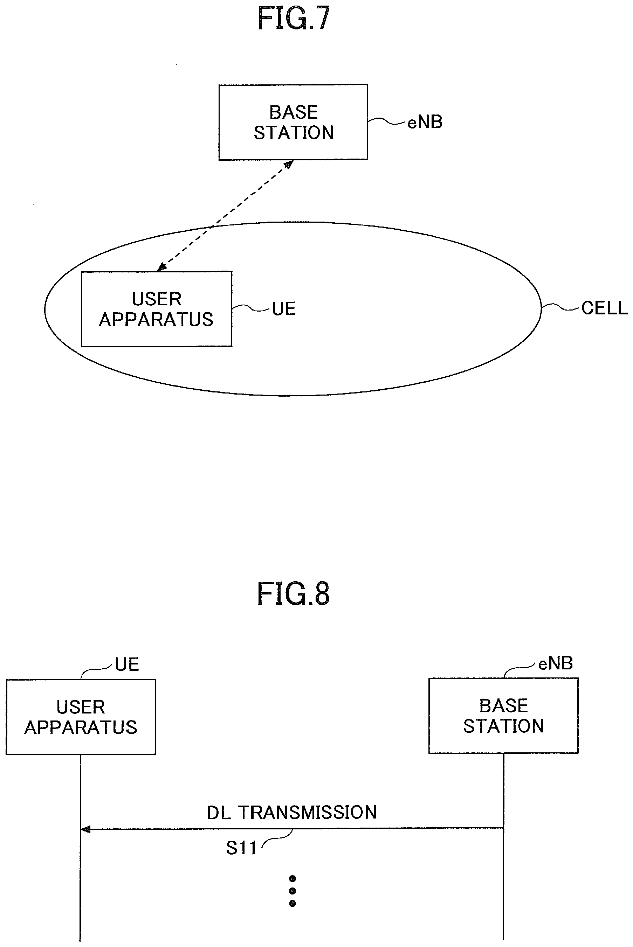

Fig. 7 is a drawing illustrating an example of a system configuration of a wireless communication system according to an embodiment. As illustrated in Fig. 7, the wireless communication system includes a base station eNB and a user apparatus UE. It should be noted that, although there are only a base station eNB and only a user apparatus UE illustrated in an example of Fig. 7, there may be a plurality of base stations eNB and a plurality of user apparatuses UE.

Fig. 8 is a sequence diagram illustrating processing steps of a wireless communication system according to an embodiment. The base station eNB allocates PDSCH RBs to the user apparatus UE, maps a UE-RS in the allocated RB according to a predetermined pattern, and includes DL data in a PDSCH of the allocated RB in transmission to the user apparatus UE.

The user apparatus UE recognizes PDSCH RBs allocated to the user apparatus UE according to DCI (Downlink Control Information) included in a PDCCH (Physical Downlink Control Channel). In the case where DL data is transmitted in transmission modes in which it is necessary to receive the PDSCH by using the UE-RS, the user apparatus UE receives the UE-RS that is mapped in the RBs allocated to the user apparatus UE, and performs PDSCH channel estimation by using the received UE-RS. The user apparatus UE demodulates the PDSCH by using the channel estimate value to receive (obtain) the DL data.

Here, according to conventional LTE, as described above, it is specified that, in the transmission modes in which the user apparatus UE receives the PDSCH by using the UE-RS, the user apparatus UE should not receive any of the PDSCH RBs allocated to the user apparatus UE in the case where, in a SS mapped subframe, an SS mapped RB is included in a part of the PDSCH RBs allocated to the user apparatus UE. Further, it is necessary for the base station eNB to perform PDSCH scheduling by avoiding the SS mapped RB in SS mapped subframes.

On the other hand, according to an embodiment, the base station eNB performs PDSCH scheduling without avoiding the SS mapped RB even in the SS mapped subframes by using the processing steps described below. Further, the user apparatus UE receives the PDSCH RBs allocated to the user apparatus UE even in the case where the SS mapped RB is included in the PDSCH RBs allocated to the user apparatus UE in SS mapped subframes.

### <Processing steps>

### (Processing steps No. 1)

In processing steps No. 1, the "conventional UE-RS mapping pattern" is used as is for indicating resource element positions onto which the UE-RS is mapped.

In the case where the SS mapped RB is included in the PDSCH RBs allocated to the user apparatus UE in SS mapped subframes, the user apparatus UE receives the PDSCH RBs allocated to the user apparatus UE by using only the UE-RS that does not overlap the SS. Further, the base station eNB performs PDSCH scheduling without avoiding the SS mapped RB even in the SS mapped subframes.

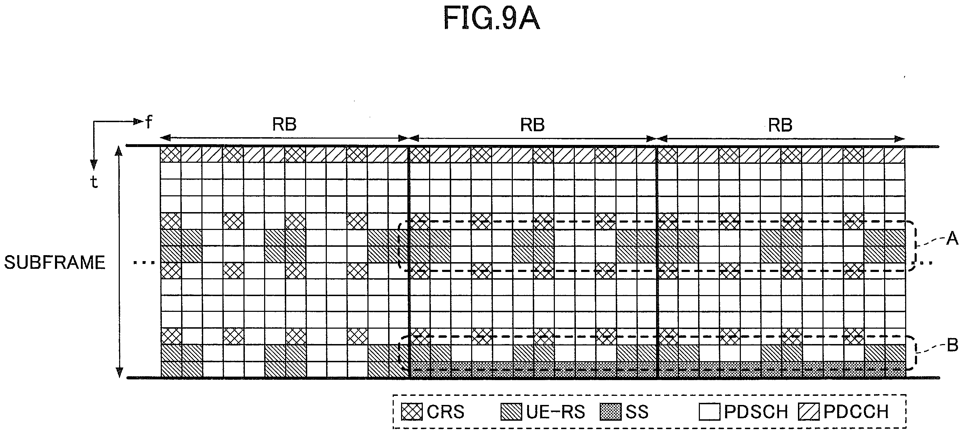

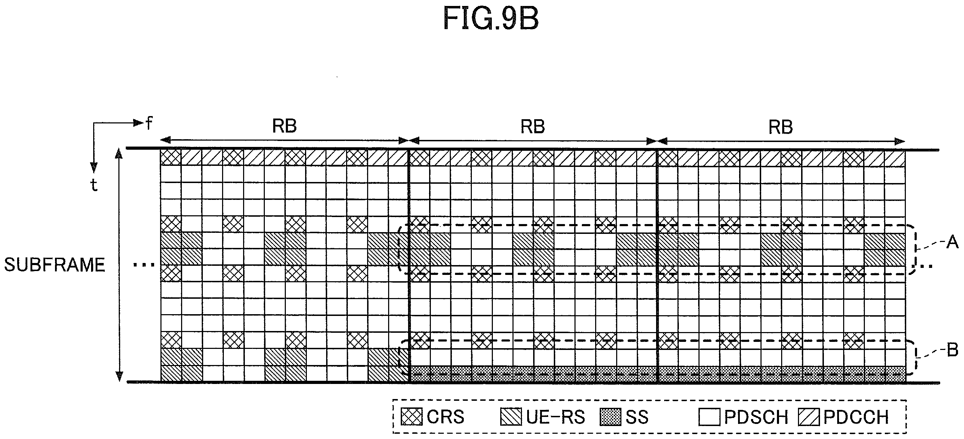

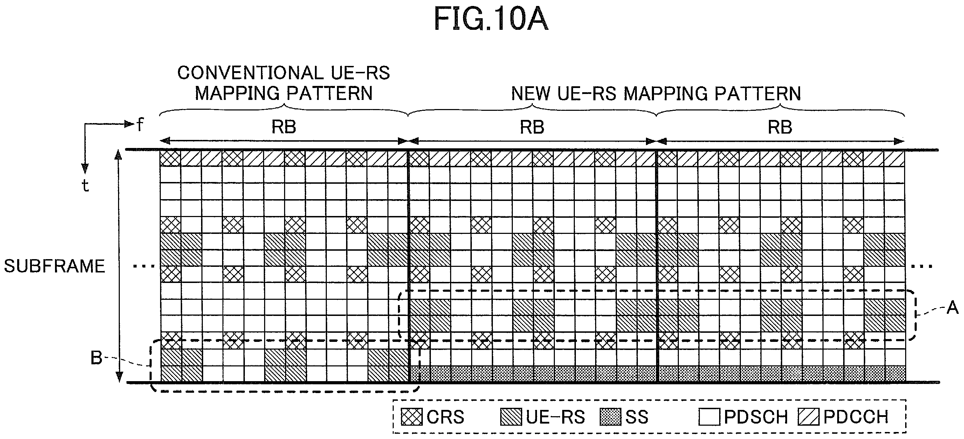

Fig. 9A and Fig. 9B are drawings illustrating processing steps No. 1 according to an embodiment. Squares in Fig. 9A and Fig. 9B correspond to resource elements. Further, positions onto which the UE-RS is mapped correspond to the positions in a pattern of resource elements onto which the UE-RS is mapped in the case of "All other downlink subframes (including TDD downlink subframe and FDD)" in the "conventional UE-RS mapping patterns" illustrated in Fig. 3. Further, SSs illustrated in Fig. 9A and Fig. 9B correspond to SSSs in TDD (as described while making reference to Fig. 6B, the SSS in TDD being mapped onto the last symbol of the subframe). The same will be apply to Fig. 10A to Fig. 12B described below.

Referring to Fig. 9A and Fig. 9B, a specific example of processing steps performed by the user apparatus UE and the base station eNB will be described. The user apparatus UE receives the PDSCH RBs allocated to the user apparatus UE by using only the UE-RS that is mapped in an area A in Fig. 9A and Fig. 9B, in a segment in the frequency direction in which the SS is mapped (that is, by using only the UE-RS that is mapped onto two consecutive resource elements).

On the other hand, as illustrated in Fig. 9A and Fig. 9B, the base station eNB performs PDSCH scheduling without avoiding the SS mapped RB even in the SS mapped subframes. The base station eNB may transmit a partially missing UE-RS in an area B as illustrated in Fig. 9A. The base station eNB may transmit a PDSCH instead of the partially missing UE-RS in the area B as illustrated in Fig. 9B.

As described above, according to the processing steps No. 1, it is possible for the base station eNB to perform PDSCH scheduling without avoiding the SS mapped RB even in the SS mapped subframes. Further, it is possible for the user apparatus UE to receive SS mapped RBs even in the SS mapped subframes. With the above arrangement, it is possible to increase throughput in the wireless communication system.

### (Processing steps No. 2)

In processing steps No. 2, in the SS mapped subframes, it is possible to prevent resource elements onto which the SS is mapped from overlapping (colliding with) resource elements onto which the UE-RS is mapped, by shifting the positions of the resource elements onto which the UE-RS is mapped to positions different from those in the "conventional UE-RS mapping pattern".

In the following descriptions, a pattern, in which positions of the UE-RS are shifted so that the resource elements onto which the SS is mapped do not overlap (collide with) the resource elements onto which the UE-RS is mapped, is referred to as a "new UE-RS mapping pattern".

The user apparatus UE receives PDSCH RBs allocated to the user apparatus UE by using the UE-RS transmitted in the "new UE-RS mapping pattern" in the SS mapped subframes.

In the SS mapped subframes, the base station eNB transmits the UE-RS according to the "new UE-RS mapping pattern", and performs PDSCH scheduling without avoiding the SS mapped RBs. In the following, the processing steps No. 2 will be described by further dividing the steps into multiple processing steps.

### (Processing steps No. 2-1)

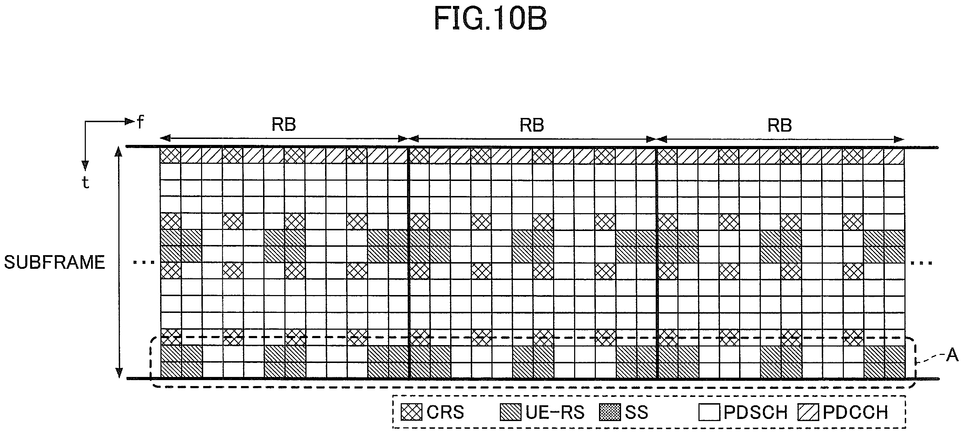

Fig. 10A and Fig. 10B are drawings illustrating processing steps No. 2-1 according to an embodiment. Fig. 10A illustrates UE-RS positions in a subframe in which the SS is transmitted. Fig. 10B illustrates UE-RS positions in a subframe in which the SS is not transmitted.

As illustrated in Fig. 10A, the base station eNB transmits the UE-RS according to the "new UE-RS mapping pattern" in which, in a range of resource elements enclosed by a segment in the time direction indicated by a subframe in which the SS is mapped, and a segment in the frequency direction in which the SS is mapped, the UE-RS positions that overlap (collide with) the SS positions are shifted in the time direction (UE-RS positions are shifted to "A" indicated in Fig. 10A, that is, the UE-RS positions are shifted by three resource elements back in the time direction) so that the UE-RS positions do not overlap the SS positions.

Further, the base station eNB transmits the UE-RS according to the "conventional UE-RS mapping pattern", in a segment in the frequency direction in which the SS positions do not overlap (collide with) the UE-RS positions (a segment in the frequency direction in which the SS is not mapped) in a subframe in which the SS is transmitted; and in a subframe in which the SS is not transmitted. Specifically, the base station eNB transmits the UE-RS without shifting the UE-RS positions in an area B in Fig. 10A and in an area A in Fig. 10B.

In a subframe in which the SS is transmitted, the user apparatus UE performs channel estimation by using the UE-RS transmitted in the "new UE-RS mapping pattern" and the UE-RS transmitted in the "conventional UE-US mapping pattern", and receives PDSCH RBs allocated to the user apparatus UE. Further, in a subframe in which the SS is not transmitted, the user apparatus UE performs channel estimation by using the UE-RS transmitted in the "conventional UE-US mapping pattern", and receives PDSCH RBs allocated to the user apparatus UE.

As described above, the UE-RS positions illustrated in Fig. 10A and Fig. 10B correspond to the positions of resource elements onto which the UE-RS is mapped in the case of "All other downlink subframes (including TDD downlink subframe and FDD)" in the patterns illustrated in Fig. 3, and the SS positions correspond to SSS positions in TDD.

As described while making reference to Fig. 6A, in the case of FDD, the PSS is mapped onto the SS position in Fig. 10A and the SSS is mapped onto the symbol next to it. Therefore, also in the case of FDD, it is possible to prevent collision of the SS and the UE-RS by using the "new UE-RS mapping pattern" illustrated in Fig. 10A and Fig. 10B.

### [Variations of the "new UE-RS mapping pattern"]

The "new UE-RS mapping pattern" illustrated in Fig. 10A and Fig. 10B are examples. According to an embodiment, it is possible to shift the UE-RS positions to any position of the resource elements as long as the SS position and the UE-RS position do not collide with each other. For example, in the processing steps, as the "new UE-RS mapping pattern", a pattern may be used in which the UE-RS positions indicated by "A" in Fig. 10A are further shifted by 1 resource element back in the time direction.

Further, the UE-RS positions may be shifted in the frequency direction in addition to the time direction. For example, as the "new UE-RS mapping pattern", a pattern may be used in which the UE-RS positions indicated by "A" in Fig. 10A are further shifted by 1 to 4 resource elements in the frequency direction (e.g., to the right or to the left in Fig. 10A).

Further, as illustrated in Fig. 3, in the case where the TDD Special Subframe Configuration is "1, 2, 6, or 7" and in the case where the TDD Special Subframe Configuration is "3, 4, 8, or 9", a pattern of resource elements onto which the UE-RS is mapped is different from the pattern in the case of "All other downlink subframes (including TDD downlink subframe and FDD)". Therefore, with respect to TDD special subframes to which the above special subframe configurations are applied, a pattern different from the patterns described above may be applied as the "new UE-RS mapping pattern".

Further, as the "new UE-RS mapping pattern", different patterns may be applied depending on TDD or FDD.

Further, in a subframe in which the CSI-RS is present, the "new UE-RS mapping pattern" may not be applied, but the "conventional UE-RS mapping pattern" may be applied.

### (Processing steps No. 2-2)

In processing steps No. 2-2, the "new UE-RS mapping pattern" is applied in a subframe in which the SS is transmitted, and the "conventional UE-RS mapping pattern" is applied in a subframe in which the SS is not transmitted. What is not described in the following may be the same as the processing steps No. 2-1.

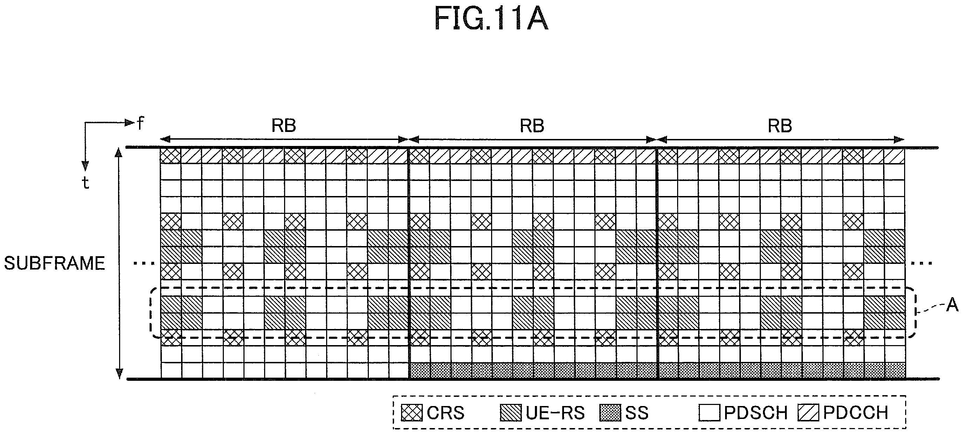

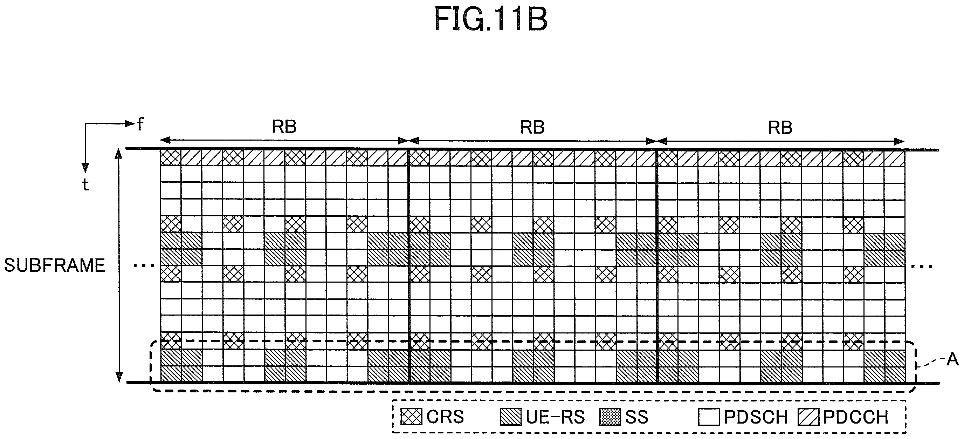

Fig. 11A and Fig. 11B are drawings illustrating processing steps No. 2-2 according to an embodiment. Fig. 11A illustrates UE-RS positions in a subframe in which the SS is transmitted. Fig. 11B illustrates UE-RS positions in a subframe in which the SS is not transmitted. As illustrated in Fig. 11A, the base station eNB transmits the UE-RS according to the "new UE-RS mapping pattern" in a subframe in which the SS is transmitted. In other words, the base station eNB shifts the UE-RS positions to positions indicated by "A" in Fig. 11A in transmission. Further, as illustrated in Fig. 11B, the base station eNB transmits the UE-RS according to the "conventional UE-RS mapping pattern" in a subframe in which the SS is not transmitted.

In the case where the user apparatus UE receives PDSCH RBs in a subframe in which the SS is transmitted, the user apparatus UE performs channel estimation by using the UE-RS transmitted in the "new UE-US mapping pattern", and receives the PDSCH RBs allocated to the user apparatus UE. Further, in a subframe in which the SS is not transmitted, the user apparatus UE performs channel estimation by using the UE-RS transmitted in the "conventional UE-US mapping pattern", and receives the PDSCH RBs allocated to the user apparatus UE.

### (Processing steps No. 2-3)

In processing steps No. 2-3, the "new UE-RS mapping pattern" is applied in all subframes. What is not described in the following may be the same as the processing steps No. 2-1.

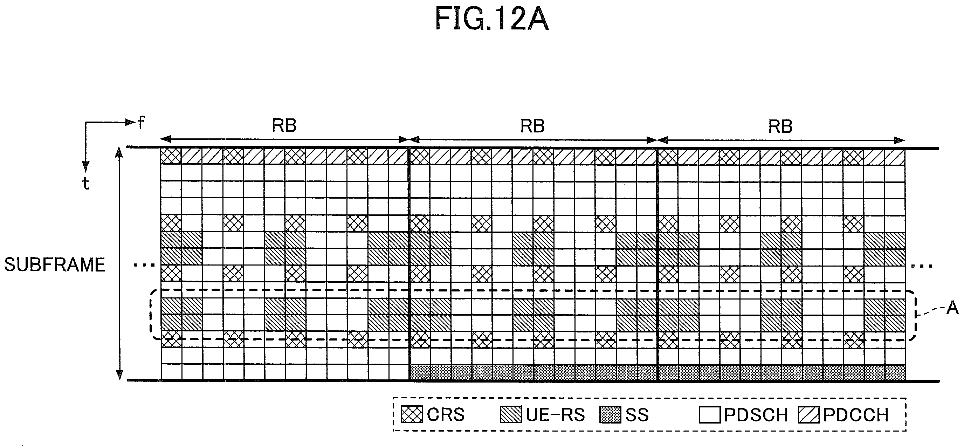

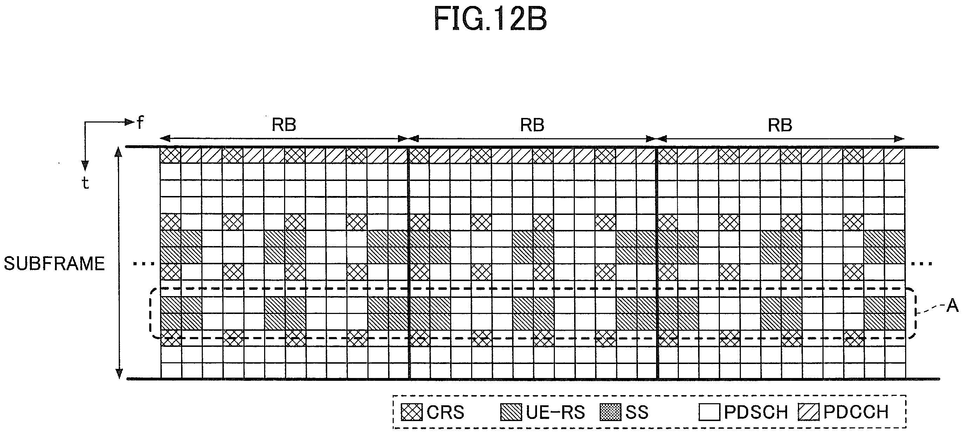

Fig. 12A and Fig. 12B are drawings illustrating processing steps No. 2-3 according to an embodiment. Fig. 12A illustrates UE-RS positions in a subframe in which the SS is transmitted. Fig. 12B illustrates UE-RS positions in a subframe in which the SS is not transmitted. As illustrated in Fig. 12A and Fig. 12B, the base station eNB transmits the UE-RS according to the "new UE-RS mapping pattern". In other words, the base station eNB shifts the UE-RS positions to positions indicated by "A" in Fig. 12A and Fig. 12B in transmission.

In the case where the user apparatus UE receives PDSCH RBs, the user apparatus UE performs channel estimation by using the UE-RS transmitted in the "new UE-US mapping pattern", and receives the PDSCH RBs allocated to the user apparatus UE.

As described above, according to the processing steps No. 2, it is possible for the base station eNB to perform PDSCH scheduling without avoiding the SS mapped RB even in the SS mapped subframes. Further, it is possible for the user apparatus UE to receive the SS mapped RBs even in the SS mapped subframes. With the above arrangement, it is possible to increase throughput in the wireless communication system.

### (Supplementary matter for the processing steps)

A user apparatus UE and a base station eNB according to an embodiment may support only one of the above-described processing steps No. 1, the processing steps No. 2-1, the processing steps No. 2-2, and the processing steps No. 2-3, or may support a part or all of the processing steps and the base station eNB may indicate to the user apparatus UE which processing steps should be used.

Further, the user apparatus UE may transmit to the base station eNB capability information indicating which processing steps described above are supported by the user apparatus UE.

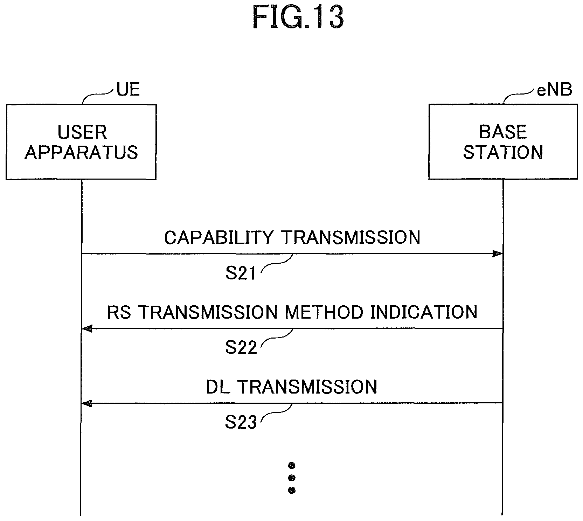

Fig. 13 is a sequence diagram illustrating processing steps of a wireless communication system according to an embodiment. The user apparatus UE transmits to the base station eNB a capability indication message indicating which processing steps described above are supported by the user apparatus UE (S21). It should be noted that the user apparatus UE may transmit to the base station eNB an indication specifically indicating which of the processing steps No. 1, the processing steps No. 2-1, the processing steps No. 2-2, and the processing steps No. 2-3 is supported by the user apparatus UE. The capability indication message may be a UECapabilityInformation message of the RRC messages.

Next, the base station eNB transmits to the user apparatus UE a message indicating UE-RS transmission based on the processing steps according to an embodiment (S22). In step S22, the base station eNB may transmit to the user apparatus a message specifically indicating which processing steps should be used. The message may be, for example, an RRC message or a MAC layer control message.

Next, the base station eNB transmits DL data by using the processing steps that have been indicated to the user apparatus UE (S23).

### <Functional structure>

### (Base station)

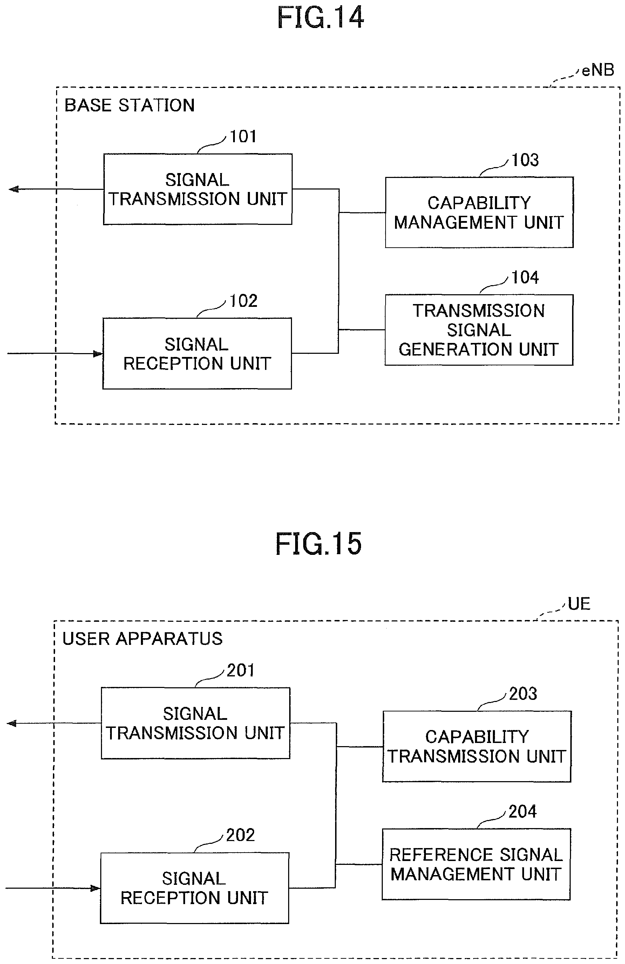

Fig. 14 is a drawing illustrating an example of a functional structure of a base station eNB according to an embodiment. As illustrated in Fig. 14, the base station eNB includes a signal transmission unit 101, a signal reception unit 102, a capability management unit 103, and a transmission signal generation unit 104. Fig. 14 illustrates functional units of the base station eNB especially related to an embodiment only, and thus, the base station eNB further includes at least functions for performing operations according to LTE (not shown in the figure). Further, a functional structure illustrated in Fig. 14 is merely an example. Functional classification and names of functional units may be anything as long as operations related to an embodiment can be performed. It should be noted that the base station eNB may be capable of performing a part of the processes described above (e.g., a specific processing step, or specific multiple processing steps).

The signal transmission unit 101 includes a function for generating a wireless signal from a signal generated by the transmission signal generation unit 104 and wirelessly transmitting the signal. The signal reception unit 102 includes a function for wirelessly receiving various types of signals from the user apparatus UE, and obtaining upper layer signals from the received physical layer signals.

It is assumed, but not so limited, that the signal transmission unit 101 and the signal reception unit 102 each have a packet buffer and perform processes of layer 1 (PHY), layer 2 (MAC, RLC, PDCP) and layer 3 (RRC).

The capability management unit 103 obtains a capability indication message from the user apparatus UE, and stores the obtained message in a memory, etc. Further, the capability management unit 103 transmits to the transmission signal generation unit 104 information indicating that the processing steps according to an embodiment are supported by the user apparatus UE. Further, the capability management unit 103 may indicate to the user apparatus UE that the UE specific reference signal will be transmitted according to the "new UE-RS mapping pattern".

The transmission signal generation unit 104 generates various types of lower layer signals from upper layer signals to be transmitted from the user apparatus UE, and generates a signal in which the generated various types of signals are mapped onto predetermined resources (resource elements) in transmission to the signal transmission unit 101. It should be noted that the transmission signal generation unit 104 may be included in the signal transmission unit 101. The signal generated by the transmission signal generation unit 104 includes various reference signals (UE-RS, CRS, CSI-RS, etc.), synchronization signals (PSS/SSS), a signal related to a PDSCH, and a signal related to a PDCCH. Further, when the transmission signal generation unit 104 maps the UE-RS onto the predetermined resources, the transmission signal generation unit 104 maps the UE-RS onto the predetermined resources according to one of the "conventional UE-RS mapping pattern" and the "new UE-RS mapping pattern".

### (User apparatus)

Fig. 15 is a drawing illustrating an example of a functional structure of a user apparatus UE according to an embodiment. As illustrated in Fig. 15, the user apparatus UE includes a signal transmission unit 201, a signal reception unit 202, a capability indication unit 203, and a reference signal management unit 204. Fig. 15 illustrates functional units of the user apparatus UE especially related to an embodiment only, and thus, the user apparatus UE further includes at least functions for performing operations according to LTE (not shown in the figure). Further, a functional structure illustrated in Fig. 15 is merely an example. Functional classification and names of functional units may be anything as long as operations related to an embodiment can be performed. It should be noted that the user apparatus UE may be capable of performing a part of the processes described above (e.g., a specific processing step, or specific multiple processing steps).

The signal transmission unit 201 includes a function for wirelessly transmitting various types of signals which should be transmitted from the user apparatus UE. The signal reception unit 202 includes a function for receiving various types of wireless signals from the base station eNB. It is assumed, but not so limited, that the signal transmission unit 201 and the signal reception unit 202 each have a packet buffer and perform processes of layer 1 (PHY), layer 2 (MAC, RLC, PDCP) and layer 3 (RRC).

Further, the signal reception unit 202 includes a function for receiving the UE-RS by recognizing positions of resource elements in which the UE-RS is transmitted according to the pattern (the "conventional UE-RS mapping pattern" or the "new UE-RS mapping pattern") of resource elements onto which the UE-RS is mapped, which pattern is controlled by the reference signal management unit 204. Further, the signal reception unit 202 performs channel estimation by using the received UE-RS, and further demodulates the PDSCH by using the channel estimate value to receive (obtain) DL data. The signal reception unit 202 may be divided into a first reception unit for receiving the reference signal and a second reception unit for demodulating the PDSCH, etc.

The capability indication unit 203 transmits to the base station eNB a capability indication message indicating that the user apparatus UE supports the processing steps according to an embodiment.

The reference signal management unit 204 includes a function for controlling the patterns of resource elements onto which the UE-RS is mapped (the "conventional UE-RS mapping pattern" and the "new UE-RS mapping pattern"). Further, the reference signal management unit 204 may obtain information indicating which pattern is used for mapping the UE-RS according to an indication transmitted from the base station eNB.

The above-described functional structures of the user apparatus UE and the base station eNB may be entirely realized by a hardware circuit (e.g., one or more IC chips), or may be partially realized by a hardware circuit and the remaining part may be realized by a CPU and programs.

### (Base station)

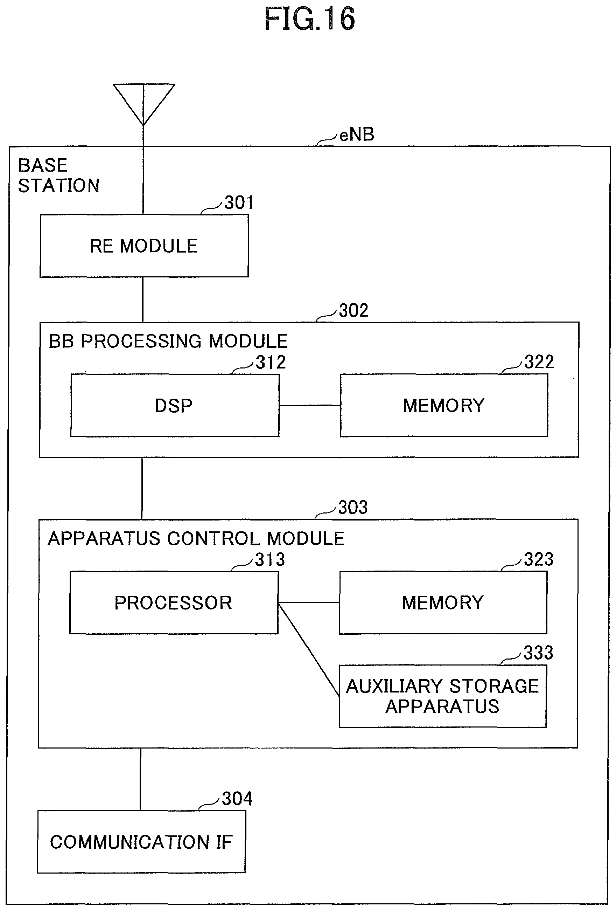

Fig. 16 is a drawing illustrating an example of a hardware configuration of a base station 2 according to an embodiment. Fig. 16 illustrates a structure closer to an implementation example compared to Fig. 14. As illustrated in Fig. 16, the base station eNB includes an RE (Radio Equipment) module 301 for performing a process related to a wireless signal, a BB (Base Band) processing module 302 for performing a baseband signal process, an apparatus control module 303 for performing a process of an upper layer, etc., and a communication IF 304 as an interface for connecting to a network.

The RE module 301 generates a radio signal to be transmitted from an antenna by performing D/A (Digital-to-Analog) conversion, modulation, frequency conversion, power amplification, etc., for a digital baseband signal received from the BB processing module 302. Further, the RE module 301 generates a digital baseband signal by performing frequency conversion, A/D (Analog to Digital) conversion, demodulation, etc., for a received wireless signal, and transmits the generated signal to the BB processing module 302. The RE module 301 includes, for example, a part of the signal transmission unit 101 and a part of the signal reception unit 102 illustrated in Fig. 14.

The BB processing module 302 performs a process of converting bidirectionally between an IP packet and a digital baseband signal. A DSP (Digital signal processor) 312 is a processor for performing signal processing in the BB processing module 302. A memory 322 is used as a work area of the DSP 312. The BB processing module 302 includes, for example, a part of the signal transmission unit 101, a part of the signal reception unit 102, and the transmission signal generation unit 104 illustrated in Fig. 14.

The apparatus control module 303 performs an IP layer protocol process, an OAM (Operation and Maintenance) process, etc. A processor 313 performs a process for the apparatus control module 303. A memory 323 is used as a work area of the processor 313. An auxiliary storage apparatus 333 is, for example, a HDD, etc., and stores various types of setting information items, etc., used for operations of the base station eNB. The apparatus control module 303 includes, for example, the capability management unit 103 illustrated in Fig. 14.

### (User apparatus)

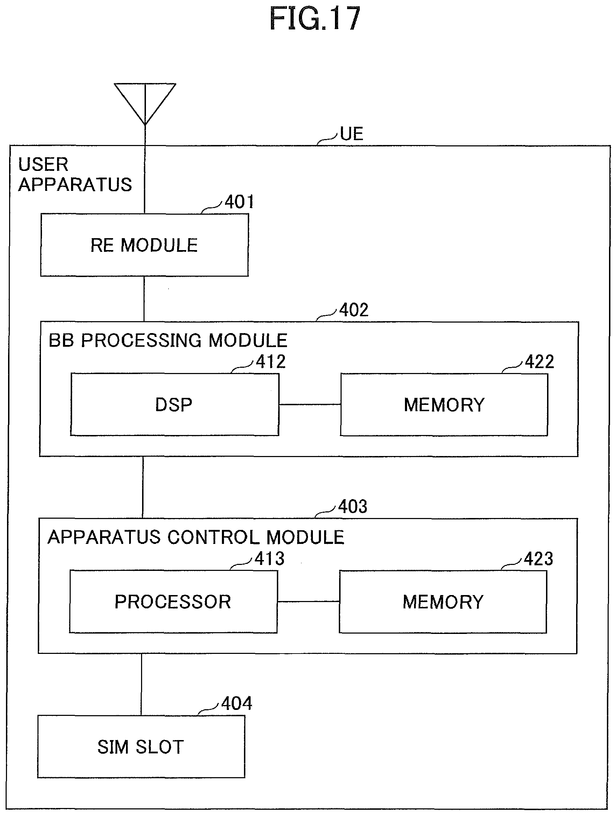

Fig. 17 is a drawing illustrating an example of a hardware configuration of a user apparatus UE according to an embodiment. Fig. 17 illustrates a structure closer to an implementation example compared to Fig. 15. As illustrated in Fig. 17, the user apparatus UE includes an RE module 401 for performing a process related to a wireless signal, a BB processing module 402 for performing baseband signal processing, an apparatus control module 403 for performing a process of an upper layer, etc., and a SIM slot 404 which is an interface used for accessing a SIM card.

The RE module 401 generates a radio signal to be transmitted from an antenna by performing D/A conversion, modulation, frequency conversion, power amplification, etc., for a digital baseband signal received from the BB processing module 402. Further, the RE module 401 generates a digital baseband signal by performing frequency conversion, A/D conversion, demodulation, etc., for a received wireless signal, and transmits the generated signal to the BB processing module 402. The RE module 401 includes, for example, a part of the signal transmission unit 201 and a part of the signal reception unit 202 illustrated in Fig. 15.

The BB processing module 402 performs a process of converting bidirectionally between an IP packet and a digital baseband signal. DSP 412 is a processor for performing a signal processing in the BB processing module 402. A memory 422 is used as a work area of the DSP 412. The BB processing module 402 includes, for example, a part of the signal transmission unit 201, a part of the signal reception unit 202, and the reference signal management unit 204 illustrated in Fig. 15.

The apparatus control module 403 performs an IP layer protocol process, processes of various types of applications, etc. A processor 413 performs a process for the apparatus control module 403. A memory 423 is used as a work area of the processor 413. Further, the processor 413 writes and reads data to and from a SIM via the SIM slot 404. The apparatus control module 403 includes, for example, the capability indication unit 203 illustrated in Fig. 15.

### <Summary>

As described above, according to an embodiment, a base station is provided. The base station communicates with a user apparatus in a wireless communication system in which LTE is supported. The base station includes a generation unit configured to generate a signal in which a UE specific reference signal is mapped according to a first pattern in which a UE specific reference signal is mapped onto a resource element other than a resource element onto which the synchronization signal is mapped in a range of resource elements enclosed by a segment in the time direction indicated by a predetermined subframe in which a synchronization signal is mapped and by a segment in the frequency direction in which the synchronization signal is mapped.

A transmission unit is configured to transmit the generated signal. According to a base station eNB, a technique is provided in which it is possible to increase throughput in a LTE-supported wireless communication system.

Further, the generation unit may generate a signal in which a UE specific reference signal is mapped onto a resource element in a range enclosed by a segment in the time direction indicated by the predetermined subframe and by a segment in the frequency direction in which the synchronization signal is not mapped, according to a second pattern different from the first pattern. With the above arrangement, it is possible for the base station eNB to transmit the UE-RS by applying the "conventional UE-RS mapping pattern" with respect to the RBs in which the SS is not mapped.

Further, the generation unit may generate a signal in which a UE specific reference signal is mapped onto a resource element in a range enclosed by a segment in the time direction indicated by the predetermined subframe and by a segment in the frequency direction in which the synchronization signal is not mapped, according to the first pattern. With the above arrangement, it is possible for the base station eNB to transmit the UE-RS by uniformly applying the "new UE-RS mapping pattern" in the SS mapped subframes, and thus, it is possible to make processing steps simpler.

Further, the generation unit may generate according to the first pattern a signal in which a UE specific reference signal is mapped onto a resource element in a subframe in which the synchronization signal is not mapped in the time direction. With the above arrangement, it is possible for the base station eNB to transmit the UE-RS by uniformly applying the "new UE-RS mapping pattern" in all subframes, and thus, it is possible to further make processing steps simpler.

Further, in the case where a channel state information reference signal is mapped in a segment in the time direction indicated by the predetermined subframe, the generation unit may generate a signal in which a UE specific reference signal is mapped onto a resource element in a segment in the time direction indicated by the predetermined subframe according to a second pattern different from the first pattern. With the above arrangement, it is possible for the base station eNB to transmit the UE-RS by applying the "conventional UE-RS mapping pattern" in a subframe in which a CSI-RS is mapped, and thus, it is possible to make processing steps simpler.

Further, the base station may further include a management unit configured to transmit information indicating that a UE specific reference signal, which is mapped according to the first pattern, will be transmitted. With the above arrangement, it is possible for the base station eNB to transmit in advance to the user apparatus UE information indicating that processing steps according to an embodiment will be applied.

Further, according to an embodiment, a base station is provided. The base station communicates with a user apparatus in an LTE-supported wireless communication system. The base station includes a generation unit configured to generate a signal in which, a UE specific reference signal is mapped onto resource elements in a range enclosed by a segment in the time direction indicated by a predetermined subframe in which a synchronization signal is mapped and a segment in the frequency direction in which the synchronization signal is mapped according to a predetermined pattern, and, in the resource elements onto which a UE specific reference signal is mapped according to the predetermined pattern in the range, onto a resource element consecutive to a symbol in the time direction onto which the synchronization signal is mapped, a physical downlink shared channel signal instead of a UE specific reference signal is mapped; and a transmission unit configured to transmit the generated signal. According to a base station eNB, a technique is provided in which it is possible to increase throughput in a LTE-supported wireless communication system.

Further, according to an embodiment, a user apparatus is provided. The user apparatus communicates with a base station in an LTE-supported wireless communication system. The user apparatus includes a first reception unit configured to receive a UE specific reference signal mapped onto resource elements consecutive in the time direction in the UE specified reference signals mapped according to a predetermined pattern onto resource elements in a range enclosed by a segment in the time direction indicated by a predetermined subframe in which a synchronization signal is mapped and a segment in the frequency direction in which the synchronization signal is mapped; and a second reception unit configured to receive a physical downlink shared channel by using the UE specific reference signal received by the first reception unit. With the above user apparatus UE, a technique is provided in which it is possible to increase throughput in a LTE-supported wireless communication system.

Further, according to an embodiment, a reference signal transmission method performed by a base station is provided. The base station communicates with a user apparatus in an LTE-supported wireless communication system. The reference signal transmission method includes generating a signal in which a UE specific reference signal is mapped according to a first pattern in which a UE specific reference signal is mapped onto a resource element other than a resource element onto which the synchronization signal is mapped in a range of resource elements enclosed by a segment in the time direction indicated by a predetermined subframe in which a synchronization signal is mapped and by a segment in the frequency direction in which the synchronization signal is mapped; and transmitting the generated signal. With the above reference signal transmission method, a technique is provided in which it is possible to increase throughput in a LTE-supported wireless communication system.

Further, according to an embodiment, a signal reception method performed by a user apparatus is provided. The user apparatus communicates with a base station in an LTE-supported wireless communication system. The signal reception method includes receiving a UE specific reference signal mapped onto resource elements consecutive in the time direction in the UE specified reference signals mapped according to a predetermined pattern onto resource elements in a range enclosed by a segment in the time direction indicated by a predetermined subframe in which a synchronization signal is mapped and a segment in the frequency direction in which the synchronization signal is mapped; and receiving a physical downlink shared channel by using the received UE specific reference signal. With the above signal reception method, a technique is provided in which it is possible to increase throughput in a LTE-supported wireless communication system.

### <Supplementary description of embodiment>

The apparatuses (user apparatus UE/base station eNB) according to an embodiment may include a CPU and a memory, may be realized by having a program executed by the CPU (processor), may be realized by hardware such as hardware circuitry in which the logic described in an embodiment is included, or may be realized by a combination of a program and hardware.

As described above, embodiments have been described. The disclosed invention is not limited to these embodiments, and a person skilled in the art would understand various variations, modifications, replacements, or the like. Specific examples of numerical values have been used for encouraging understanding of the present invention. These numeric values are merely examples and, unless otherwise noted, any appropriate values may be used. In the above description, partitioning of items is not essential to the present invention. Matters described in more than two items may be combined if necessary. Matters described in one item may be applied to matters described in another item (as long as they do not conflict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described sequences and flowcharts according to an embodiment may be changed as long as there is no contradiction. For the sake of description convenience, the user apparatus UE/the base station eNB has been described by using functional block diagrams. These apparatuses may be implemented by hardware, by software, or by combination of both. The software which is executed by a processor included in a user apparatus UE according to an embodiment and the software which is executed by a processor included in a base station eNB may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

It should be noted that, in an embodiment, the "new UE-RS mapping pattern" is an example of the first pattern. The "conventional UE-RS mapping pattern" is an example of the second pattern and an example of the predetermined pattern.

The present application is based on and claims the benefit of priority of Japanese Priority Application No. 2015-220792 filed on November 10, 2015, the entire contents of which are hereby incorporated by reference.

### [DESCRIPTION OF THE REFERENCE NUMERALS]

UE User apparatus
eNB Base station
101 Signal transmission unit
102 Signal reception unit
103 Capability management unit
104 Transmission signal generation unit
201 Signal transmission unit
202 Signal reception unit
203 Capability reporting unit
204 Reference signal management unit
301 RE module
302 BB processing module
303 Apparatus control module
304 Communication IF
401 RE module
402 BB processing module
403 Apparatus control module
404 SIM slot

## Claims

1. A base station that communicates with a user apparatus in an LTE-supported wireless communication system, the base station comprising:
a generation unit configured to generate a signal in which a UE specific reference signal is mapped according to a first pattern in which, in a range of resource elements enclosed by a segment in the time direction indicated by a predetermined subframe in which a synchronization signal is mapped and by a segment in the frequency direction in which the synchronization signal is mapped, a UE specific reference signal is mapped onto a resource element other than a resource element onto which the synchronization signal is mapped; and
a transmission unit configured to transmit the generated signal.

2. The base station according to claim 1, wherein the generation unit generates a signal in which a UE specific reference signal is mapped according to a second pattern different from the first pattern onto a resource element in a range enclosed by a segment in the time direction indicated by the predetermined subframe and a segment in the frequency direction in which the synchronization signal is not mapped.

3. The base station according to claim 1, wherein the generation unit generates a signal in which a specific reference signal is mapped according to the first pattern onto a resource element in a range enclosed by a segment in the time direction indicated by the predetermined subframe and a segment in the frequency direction in which the synchronization signal is not mapped.

4. The base station according to claim 3, wherein the generation unit generates a signal in which a UE specific reference signal is mapped according to the first pattern onto a resource element in a subframe in which a synchronization signal is not mapped in the time direction.

5. The base station according to any one of claims 1 to 4, wherein the generation unit generates a signal in which a UE specific reference signal is mapped according to a second pattern different from the first pattern onto a resource element in a segment in the time direction indicated by the predetermined subframe in the case where a channel state information reference signal is mapped in a segment in the time direction indicated by the predetermined subframe.

6. The base station according to any one of claims 1 to 5, further comprising:
a management unit configured to transmit information indicating that a UE specific reference signal, which is mapped according to the first pattern, will be transmitted.

7. A base station that communicates with a user apparatus in an LTE-supported wireless communication system, the base station comprising:
a generation unit configured to generate a signal in which a UE specific reference signal is mapped according to a predetermined pattern onto resource elements in a range enclosed by a segment in the time direction indicated by a predetermined subframe in which a synchronization signal is mapped and by a segment in the frequency direction in which the synchronization signal is mapped, and,
in the resource elements onto which a UE specific reference signal is mapped according to the predetermined pattern in the range, onto a resource element consecutive to a symbol onto which the synchronization signal is mapped, a physical downlink shared channel signal is mapped instead of a UE specific reference signal; and
a transmission unit configured to transmit the generated signal.

8. A user apparatus that communicates with a base station in an LTE-supported wireless communication system, the user apparatus comprising:
a first reception unit configured to receive a UE specific reference signal mapped onto resource elements consecutive in the time direction in UE specific reference signals mapped according to a predetermined pattern onto resource elements in a range enclosed by a segment in the time direction indicated by a predetermined subframe in which a synchronization signal is mapped and a segment in the frequency direction in which the synchronization signal is mapped; and
a second reception unit configured to receive a physical downlink shared channel signal by using the UE specific reference signal received by the first reception unit.

9. A reference signal transmission method performed by a base station that communicates with a user apparatus in an LTE-supported wireless communication system, the reference signal transmission method comprising:
generating a signal in which a UE specific reference signal is mapped according to a first pattern in which, in a range of resource elements enclosed by a segment in the time direction indicated by a predetermined subframe in which a synchronization signal is mapped and by a segment in the frequency direction in which the synchronization signal is mapped, a UE specific reference signal is mapped onto a resource element other than a resource element onto which the synchronization signal is mapped; and
transmitting the generated signal.

10. A signal reception method performed by a user apparatus that communicates with a base station in an LTE-supported wireless communication system, the signal reception method comprising:
receiving, in UE specific reference signals mapped according to a predetermined pattern onto resource elements in a range enclosed by a segment in the time direction indicated by a predetermined subframe in which a synchronization signal is mapped and by a segment in the frequency direction in which the synchronization signal is mapped, a UE specific reference signal mapped onto resource elements consecutive in the time direction; and
receiving a physical downlink shared channel signal by using the received UE specific reference signal.
